# EUROPEAN PATENT APPLICATION

(11) **EP 4 183 263 A1**
(43) Date of publication of application: **24.05.2023**
(21) Application number: 23151460.5
(22) Date of filing: 05.06.2020
(51) Int. Cl.: A23L 13/40, A23B 4/027, A23B 4/12, A23B 4/20, A23L 3/3463, A23L 3/358, A23L 13/60

(54) **COMPOSITION FOR MAINTAINING OR IMPROVING THE QUALITY OF PROCESSED MEAT**

(30) Priority: 05.06.2019 EP 19178471
(62) Divisional of application: 20730284.5
(71) Applicant: Purac Biochem B.V., 4206 AC Gorinchem (NL)
(72) Inventor: Hilhorst, Gerrit Anthon Rene, 4206 AC Gorinchem (NL); Karleen, Saffiera, 4206 AC Gorinchem (NL); Van Dijk, Lonneke, 4206 AC Gorinchem (NL); Yi, Liya, 4206 AC Gorinchem (NL); Dobbelstein, Stephan Hubertus Johannes Mathias, 4206 AC Gorinchem (NL)
(74) Representative: Nederlandsch Octrooibureau

(57) **Abstract**

The invention relates to a composition for maintaining or improving the quality of processed meat, said composition comprising on a dry matter basis:
• between 20 and 75% w/w acid equivalent of a salt of an organic acid component selected from the group of acetate, lactate, propionate and combinations thereof;
• between 10 and 75% w/w of plasma protein; and
• between 0.5 and 5% w/w acid equivalent of ascorbate;
wherein the composition when diluted with distilled water of 20°C to a dry matter content of 10% w/w has a pH in the range of 5.0 to 9.0.

This composition can replace conventional stabilizers, acid regulators and anti-oxidants without deteriorating the quality of the processed meat. Furthermore, this composition can be composed of "label friendly" ingredients, with a more attractive consumer perception.

The invention also relates to a method for the preparation of the aforementioned meat treatment composition.

## Description

### TECHNICAL FIELD OF THE INVENTION

The invention relates to compositions for maintaining or improving the quality of processed meat comprising (i) an organic acid component selected from the group of acetate, lactate and combinations thereof, (ii) plasma protein, and (iii) ascorbate. The invention further relates to a method for the preparation of these compositions and a process of preparing processed meat.

### BACKGROUND OF THE INVENTION

Processed meat is meat that has been subjected to modification in order to improve its taste and/or to extend its shelf life. Processing methods include e.g. grinding, salting, curing, fermentation and smoking. Examples of processed meat products are bacon, ham, sausages, salami, corned beef, beef jerky, canned meat and meat-based sauces.

In order to attain processed meat with the desired properties, various additional ingredients are commonly used. These additives may contribute to the shelf life, both microbiologically and chemically, the texture, flavor and color of the product and to the yield of the method of preparation. Conventional additives are e.g. salts, phosphates, benzoates, acids, nitrate or nitrite (from chemical sources), caseinate. Such additives may be disliked by consumers because they are perceived as "chemical" or "artificial" or the like. There is a need for additives that are perceived as more "natural" or "responsible" or "recognizable".

Attempts to replace these "chemical" additives by more attractive, "label friendly" additives are often hampered due to the complexity of the functional effects of the former additives. Phosphates for instance are known to affect not only the pH stability but also the protein extraction from the meat, the water-holding capacity and the hydration of the meat. Nitrate and nitrite are known to affect not only the color and the flavor of the meat but also have an antimicrobial effect. Since there generally also is a complex interplay between the different additives in their effects, it has turned out to be difficult to find alternatives for conventional "chemical" additives.

Hurtado et al. describe the use of porcine blood plasma in the production of frankfurters without added phosphates (Procedia Food Science 1 (2011) 477-482). Plasma can be seen as a cheap, healthy and ecologic source of functional proteins without allergenic potential.

EP3106041A1 describes meat treatment compositions comprising one or more acetic acid salts and one or more polysaccharide materials which are particularly effective in reducing moisture loss during cooking of meat. Since in some embodiments of these compositions, the ingredients can be based on natural vinegar and plant derived fiber materials, these compositions may also be attractive from the perspective of "label friendly" additives.

WO/2018/106109 describes a meat treatment composition comprising a combination of a buffered food acid component in the form of partially or completely neutralized acetic acid and a nitrite source in the form of a cultured vegetable extract.

EP3170403A1 describes a preservative system comprising:
- a cinnamate component selected from cinnamic acid, salts of cinnamic acid and combinations thereof;
- an alkanoate component selected from selected from acetic acid, propionic acid, salts of acetic acid, salts of propionic acid combinations thereof;
wherein the cinnamate component (CC) and the alkanoate component (ALC) are present in a molar ratio of LC:CC 20 within the range of 0,5-250.

WO/2009/127029 describes meat cuts containing added omega-3 fatty acid, wherein the vehicle of addition of omega-3 fatty acid is a brine composed of water, sodium chloride, polyphosphates, sodium erythorbate, sugar, potassium or sodium lactate, antioxidant, plasma, dispersing agent, citric acid and omega-3.

WO/2016/167652 describes a method for the preparation of a protein composition comprising protein fibres from blood plasma, comprising the steps of:
a. providing blood plasma proteins,
b. preparing a mixed aqueous medium by mixing, in an aqueous medium, the blood plasma proteins of step a. and a hydrocolloid component comprising xanthan gum or gellan gum,
c. bringing the pH of the mixed aqueous medium of step b. to 3 - 5 to allow fibres to be formed in the medium, therewith providing a protein fibres comprising medium,
d. fixating the protein fibres of the protein fibres comprising medium of step c. to provide a fixed protein fibres comprising medium.

US/2010/040746 describes a method for preparing a meat product, comprising the steps of:
- mixing a preservative, a curing agent, and a texture agent to form a brine solution;
- adding the brine solution to a meat product;
- cooking the meat product;
- chilling the meat product;
- packaging the meat product; and
- pasteurizing the meat product.

It is the objective of the invention to find additive compositions for processed meat that have multiple functionalities and that are considered more attractive to consumers than conventional additives.

### SUMMARY OF THE INVENTION

The inventors have developed a composition for maintaining or improving the quality of processed meat that has multiple functionalities and that can be based on "label friendly" ingredients that are more attractive to consumers.

The present composition for maintaining or improving the quality of processed meat comprises on a dry matter basis:
- between 20 and 75% w/w acid equivalent of a salt of an organic acid component selected from the group of acetate, lactate and combinations thereof;
- between 10 and 75% w/w of plasma protein; and
- between 0.5 and 5% w/w acid equivalent of ascorbate;
   wherein the composition when diluted with distilled water of 20°C to a dry matter content of 10% w/w has a pH in the range of 5.0 to 9.0.

It was found that this combination of ingredients can replace conventional stabilizers, acid regulators and anti-oxidants without deteriorating the quality of the processed meat. Furthermore, this composition can be composed of "label friendly" ingredients, with a more attractive consumer perception.

The invention also relates to a method for the preparation of a composition for maintaining or improving the quality of processed meat, the method comprising
- providing an organic acid product selected from the group of a vinegar product, a lactic acid fermentation product and combinations thereof, containing on a dry weight basis at least 50% w/w acid equivalent of acetate and/or lactate, wherein the acetate is selected from sodium acetate, potassium acetate, calcium acetate, acetic acid and combinations thereof and wherein the lactate is selected from sodium lactate, potassium lactate, calcium lactate, lactic acid and combinations thereof,
- providing a blood plasma protein product containing on a dry weight basis at least 30% w/w plasma protein
   providing a fruit extract containing on a dry weight basis at least 10% w/w ascorbate;
- mixing the organic acid product, the blood plasma protein product and the fruit extract to prepare a composition with a dry matter content of at least 30% w/w, preferably at least 50% w/w.

The invention also relates to a process of preparing processed meat, said process comprising adding the composition according to the invention to processed meat in an amount of between 0.5 and 15% w/w dry matter.

### DETAILED DESCRIPTION OF THE INVENTION

Accordingly, a first aspect of the invention relates to a composition for maintaining or improving the quality of processed meat comprising on a dry matter basis:
- between 20 and 75% w/w acid equivalent of an organic acid component selected from the group of acetate, lactate and combinations thereof;
- between 10 and 75% w/w of plasma protein; and
- between 0.5 and 5% w/w acid equivalent of ascorbate;
   wherein the composition when diluted with distilled water of 20°C to a dry matter content of 10% w/w has a pH in the range of 5.0 to 9.0.

The term "acetate" as used herein, unless indicated otherwise, encompasses acetic acid, salts of acetic acid, dissociated acetate and combinations thereof.

The term "lactate" as used herein, unless indicated otherwise, encompasses lactic acid, salts of lactic acid, dissociated lactate and combinations thereof.

The term "propionate" as used herein, unless indicated otherwise, encompasses propionic acid, salts of propionic acid, dissociated propionate and combinations thereof.

The concentration of acetate expressed as "% w/w acid equivalent" refers to the total concentration of acetate assuming that all acetate is present as acetic acid.

The concentration of lactate expressed as "% w/w acid equivalent" refers to the total concentration of lactate assuming that all lactate is present as lactic acid.

The concentration of propionate expressed as "% w/w acid equivalent" refers to the total concentration of propionate assuming that all propionate is present as propionic acid.

The term "ascorbate" as used herein, unless indicated otherwise, encompasses ascorbic acid, salts of ascorbic acid, dissociated ascorbate and combinations thereof. The term "ascorbate" further encompasses iso-ascorbic acid (erythorbic acid), salts of iso-ascorbic acid, dissociated iso-ascorbate and combinations thereof.

The concentration of ascorbate expressed as "% w/w acid equivalent" refers to the total concentration of ascorbate assuming that all ascorbate is present as ascorbic acid.

The term "plasma protein" as used herein refers to protein that is present in blood plasma.

The term "diameter" as used herein in relation to particle, unless indicated otherwise, refers to the average equivalent spherical diameter of said particle.

In another embodiment, the invention relates to a composition for maintaining or improving the quality of processed meat comprising on a dry matter basis:
- between 20 and 60% w/w acid equivalent of an organic acid component selected from the group of acetate, lactate, propionate and combinations thereof;
- between 10 and 75% w/w of plasma protein; and
- between 0.5 and 5% w/w acid equivalent of ascorbate;
wherein the composition when diluted with distilled water of 20°C to a dry matter content of 10% w/w has a pH in the range of 5.0 to 9.0.

The composition can be a powder having a water content of less than 15% w/w or an aqueous liquid having a dry matter content of 10 to 80% w/w.

If the composition is a powder, the acetate is preferably selected from sodium acetate, potassium acetate, calcium acetate, acetic acid and combinations thereof. Similarly, the lactate is preferably selected from sodium lactate, potassium lactate, calcium lactate, lactic acid and combinations thereof, and the propionate is preferably selected from sodium propionate, potassium propionate, calcium propionate, propionic acid and combinations thereof. The ascorbate is preferably selected from sodium ascorbate, potassium ascorbate, ascorbic acid and combinations thereof.

In a preferred embodiment, the composition is a powder having a water content of less than 15% w/w; wherein the acetate, if present, is elected from sodium acetate, potassium acetate, calcium acetate, acetic acid and combinations thereof; wherein the lactate, if present, is selected from sodium lactate, potassium lactate, calcium lactate, lactic acid and combinations thereof; wherein the propionate, if present, is selected from sodium propionate, potassium propionate, calcium propionate, propionic acid and combinations thereof; wherein the ascorbate, if present, is selected from sodium ascorbate, potassium ascorbate, ascorbic acid and combinations thereof. More preferably, the water content of the powder is less than 10% w/w, even more preferably less than 7% w/w.

In a preferred embodiment, the acetate is present as sodium acetate. In yet another preferred embodiment, the lactate is present as sodium lactate. In yet another preferred embodiment, the propionate is present as sodium propionate. In yet another preferred embodiment, the ascorbate is present as sodium ascorbate.

According to another preferred embodiment, the composition is an aqueous liquid having a dry matter content of 10 to 80% w/w. More preferably, the dry matter content of the aqueous liquid is between 20 and 75% w/w, even more preferably between 30 and 70% w/w.

In the composition in liquid form, the acetate is preferably selected from acetate (in its dissociated form), acetic acid and combinations thereof. The lactate is preferably selected from lactate (in its dissociated form), lactic acid and combinations thereof. The propionate is preferably selected from propionate (in its dissociated form), propionic acid and combinations thereof. The ascorbate is preferably selected from ascorbate (in its dissociated form), ascorbic acid and combinations thereof.

In a preferred embodiment of the invention, the composition comprises on a dry matter basis between 25 and 65% w/w, more preferably between 30 and 60% w/w, acid equivalent of the organic acid component selected from the group of acetate, lactate and combinations thereof.

In another preferred embodiment of the invention, the composition comprises on a dry matter basis between 25 and 65% w/w, preferably between 30 and 60% w/w, acid equivalent of the organic acid component selected from the group of acetate, lactate, propionate and combinations thereof.

The acetate in the composition is preferably derived from neutralized vinegar. Vinegar can be generally defined as an aqueous solution of acetic acid that additionally contains small quantities of components that are produced during the production process, e.g. by the fermentation organisms. Vinegar is broadly used as a cooking ingredient and in pickling.

Vinegar is preferably obtained by fermentation of a dilute ethanol-containing substrate, preferably using acetic acid bacteria. This ethanol-containing substrate is preferably obtained by yeast fermentation of a vegetal product. The vinegar may be selected from the group consisting of white vinegar, brandy vinegar, alcoholic vinegar, balsamic vinegar, wine vinegar, malt vinegar, beer vinegar, potato vinegar, rice vinegar, apple vinegar, cherry vinegar, and cane vinegar. In a particularly preferred embodiment of the invention, the vinegar is cane vinegar.

In another preferred embodiment of the invention, the acetate content of the neutralized vinegar is at least 5% (w/w), more preferably at least 7.5% (w/w/, even more preferably at least 10% (w/w). It is also possible to make use of neutralized vinegar that has been preconcentrated to a certain extent. Such products are commercially available and typically have an acetate content between 20 and 30% (w/w). In a preferred embodiment of the invention, the acetate content is at least 20% (w/w), more preferably at least 25% (w/w), e.g. about 29 or 30% (w/w).

Neutralized vinegar may be produced by adding an alkalizing agent to vinegar, preferably an alkalizing metal salt, such as a metal carbonate or a metal hydroxide. The metal hydroxide is preferably selected from sodium hydroxide, potassium hydroxide, calcium hydroxide and combinations thereof. Most preferably, the metal hydroxide is sodium hydroxide. The neutralized vinegar may suitably be concentrated by water removal, eg by evaporation, and/or dried, eg by spray drying.

Preferably, the neutralized vinegar when diluted with distilled water of 20°C to a dry matter content of 10% w/w preferably has a pH of at least 6, more preferably of at least 7, even more preferably of at least 7.5, most preferably of at least 8.0.

In accordance with an embodiment of the invention, the neutralized vinegar is provided in the form of a free flowing powder. The production of free flowing powders from liquid neutralized vinegars, using conventional drying techniques such as spray drying, has been described in the art. For example, international patent application no. WO/2014/021719, the disclosure of which is hereby incorporated by reference in its entirety, describes processes of producing free flowing powders from alkalized vinegar. Additionally, neutralized vinegars in free flowing powder form are commercially available.

The lactate is preferably provided in the form of a lactic acid fermentation product. The fermentation process for the production of lactate is generally carried out by fermentation of a sugar-containing medium with micro-organisms capable of transforming the sugar into lactic acid. Such micro-organisms are well-known to the person skilled in the art and include lactic acid bacteria. Sugars that can be used generally are C₆ sugars in both monosaccharide and disaccharide form such as glucose, saccharose and lactose. Preferably, saccharose from cane, corn or beet is used. The fermentation can generally be carried out with or without pH control. Without pH control, the pH will decrease with ongoing fermentation due to the production of lactic acid. With pH control, alkalizing agents are added to the fermentation broth in order to maintain the pH at a desired level such as a neutral or near-neutral pH. Alkalizing agents that are typically used are sodium hydroxide, potassium hydroxide, calcium hydroxide etcetera. After fermentation, the lactic acid fermentation product is usually further processed by means of downstream processes such as centrifugation, filtration, membrane filtration, distillation, extraction, evaporation and drying in order to purify and concentrate the product.

Preferably, the lactate is a neutralized lactic acid fermentation product that is obtained by means of lactic acid fermentation and addition of an alkalizing agent. The alkalizing agent preferably is an alkalizing metal salt, such as a metal carbonate or a metal hydroxide. More preferably, the metal hydroxide may be sodium hydroxide, potassium hydroxide or calcium hydroxide. Most preferably, the metal hydroxide is sodium hydroxide.

The neutralized lactic acid fermentation product may suitably be concentrated by water removal, eg by evaporation, and/or dried, eg by spray drying.

The neutralized lactic acid fermentation product when diluted with distilled water of 20°C to a dry matter content of 10% w/w preferably has a pH of at least 6, more preferably of at least 7, even more preferably of at least 7.5, most preferably of at least 8.0.

In accordance with an embodiment of the invention, the neutralized lactic acid fermentation product is provided in the form of a free flowing powder. The production of free flowing powders from liquid neutralized lactic acid fermentation products, using conventional drying techniques such as spray drying, has been described in the art. For example, European patent no. EP2879524B1, the disclosure of which is hereby incorporated by reference in its entirety, describes processes of producing free flowing powders from neutralized lactic acid fermentation products containing both Na and Ca. Additionally, neutralized lactic acid fermentation products in free flowing powder form are commercially available.

The propionate is preferably derived from a propionic acid fermentation product. The fermentation process for the production of propionate is generally carried out by fermentation of either a sugar-containing medium or a lactic acid containing medium with micro-organisms capable of transforming the substrate into propionic acid. Such micro-organisms are well-known to the person skilled in the art and include propionibacteria.

Sugars that can be used generally are C₆ sugars in both monosaccharide and disaccharide form such as glucose, saccharose and lactose. Preferably, saccharose from cane, corn or beet is used. The fermentation can generally be carried out with or without pH control. Without pH control, the pH may decrease with ongoing fermentation due to the production of lactic acid. With pH control, alkalizing agents are added to the fermentation broth in order to maintain the pH at a desired level such as a neutral or near-neutral pH. Alkalizing agents that are typically used are sodium hydroxide, potassium hydroxide, calcium hydroxide etcetera. After fermentation, the propionic acid fermentation product is usually further processed by means of downstream processes such as centrifugation, filtration, membrane filtration, distillation, extraction, evaporation and drying in order to purify and concentrate the product.

Preferably, the propionate is obtained by means of propionic acid fermentation and preferably an alkalizing agent is added to the propionic acid fermentation product so obtained. The alkalizing agent preferably is an alkalizing metal salt, such as a metal carbonate or a metal hydroxide. More preferably, the metal hydroxide may be sodium hydroxide, potassium hydroxide or calcium hydroxide. Most preferably, the metal hydroxide is sodium hydroxide.

Before or after neutralization, the propionic acid fermentation product may suitably be concentrated by water removal, eg by evaporation, and/or dried, eg by spray drying.

The neutralized propionic acid fermentation product when diluted with distilled water of 20°C to a dry matter content of 10% w/w preferably has a pH of at least 6, more preferably of at least 7, even more preferably of at least 7.5, most preferably of at least 8.0.

In accordance with an embodiment of the invention, the neutralized propionic acid fermentation product is provided in the form of a free flowing powder. The production of free flowing powders from liquid propionic acid fermentation products, using conventional drying techniques such as spray drying, has been described in the art.

Additionally, propionic acid fermentation products in free flowing powder form are commercially available.

Animal blood from slaughterhouse is a by-product often considered and treated as waste. Blood is however a rich source of iron and proteins of high nutritional and functional quality. Plasma is the liquid portion of blood remaining after the blood cells have been removed by e.g. centrifugation. Plasma contains a variety of proteins with albumins being the most abundant (50-60%), followed by globulins (alpha, beta and gamma) and globins. Plasma is the most widely used blood product in the food industry because it is neutral in taste and devoid of the dark color associated with the red blood cells. Blood plasma typically contains a considerable amount of protein which can be further concentrated and separated into different protein fractions. This has opened up the way to prepare different hemo-derivatives, which can be used in food products for different purposes, e.g., to improve water holding capacity or emulsion stability; as food colorings; to increase nutritional value; to stabilize gels or foams; to improve bakery and meat batters; to reduce fat content in different products, etc.

Commercially available blood plasma protein products are eg Plasma Powder FG, and PP from Sonac BV (the Netherlands), Prolican 70 from Lican Functional Protein Source (Chile), Immunolin^{®} from Proliant (USA) and Plasma from Veos NV (Belgium).

The plasma protein in the present composition is preferably derived from animal blood, more preferably from porcine blood, bovine blood and/or poultry blood.

Plasma protein is preferably provided by blood plasma protein products having a protein content higher than 30% w/w, preferably higher than 50% w/w, more preferably higher than 60% w/w, most preferably higher than 70% w/w.

The protein content can suitably be measured with the Kjeldahl technique, using a conversion factor for converting the measured nitrogen content into the protein content of 6.25.

In a preferred embodiment of the invention, the composition according to the invention comprises on a dry matter basis between 12 and 55% w/w, more preferably between 15 and 50% w/w, of plasma protein.

The composition according to the invention also comprises ascorbate. Ascorbate is approved as an antioxidant in food products and may be used to e.g. retard color and lipid oxidation and to enhance curing processes. Next to being an antioxidant, it is also known as a vitamin, namely vitamin C. Ascorbate includes iso-ascorbate, which is also known as erythorbate.

If the composition is a powder, the ascorbate is preferably selected from sodium ascorbate, potassium ascorbate, calcium ascorbate, ascorbic acid and combinations thereof. In the composition in liquid form, the ascorbate is preferably selected from ascorbate (in its dissociated form), ascorbic acid and combinations thereof.

The composition according to the invention comprises on a dry matter basis between 0.5 and 5% w/w acid equivalent of ascorbate, preferably between 1.0 and 4% w/w acid equivalent of ascorbate, more preferably between 1.2 and 3.5% w/w acid equivalent of ascorbate.

Ascorbate can be produced by means of chemical synthesis, fermentation or a combination of both techniques, but it can also be retrieved from natural sources such as fruit products. Examples of fruit products with a relatively high ascorbate content are acerola, camu camu, seabuckthorn, Indian gooseberry, rose hip, kakadu plum, guava, blackcurrant, orange and lemon. Extracts of these fruits are commercially available as an ascorbate source such as for instance Acerola Cherry 36 from Naturex. In a preferred embodiment of the invention, the ascorbate is provided by a fruit extract. In an even more preferred embodiment, the fruit extract is acerola extract.

In a preferred embodiment of the invention, the composition, when dispersed into distilled water of 20°C to provide 100 grams of dry matter per L of water, produces an aqueous composition having a pH in the range of 5.5 to 8.5, more preferably in the range of 5.8 to 8.0.

The present composition for maintaining or improving the quality of processed meat can typically be produced by combining various, preferably plant-based, sources of the functional ingredients. A composition in powder form can be obtained by providing the various components in powder form and preparing the composition by means of powder blending. A composition in liquid form can be obtained by providing at least one of the components in liquid form and mixing the other ingredients into the liquid. In a preferred embodiment, the acetate and/or lactate is provided in liquid form. It is also possible to subsequently dry the liquid composition thus obtained, in order to prepare a composition according to the invention in powder form. Drying methods such as spray drying are well known to persons skilled in the art.

According to a second aspect of the invention, a method for the preparation of a composition for maintaining or improving the quality of processed meat as described herein before is provided. The method comprises the steps of:
- providing an organic acid product selected from the group of a vinegar product, a lactic acid fermentation product and combinations thereof, containing on a dry weight basis at least 50% w/w acid equivalent of acetate and/or lactate, wherein the acetate is selected from sodium acetate, potassium acetate, calcium acetate, acetic acid and combinations thereof and wherein the lactate is selected from sodium lactate, potassium lactate, calcium lactate, lactic acid and combinations thereof,
- providing a blood plasma protein product containing on a dry weight basis at least 30% w/w plasma protein
- providing a fruit extract containing on a dry weight basis at least 10% w/w ascorbate;
- mixing the organic acid product, the blood plasma protein product and the fruit extract to prepare a composition with a dry matter content of at least 30% w/w, preferably at least 50% w/w.

In another embodiment of the invention, a method for the preparation of a composition for maintaining or improving the quality of processed meat as described herein before is provided. The method comprises the steps of:
- providing an organic acid product selected from the group of a vinegar product, a lactic acid fermentation product, a propionic acid fermentation product and combinations thereof, containing on a dry weight basis at least 50% w/w acid equivalent of acetate and/or lactate and/or propionate, wherein the acetate is selected from sodium acetate, potassium acetate, calcium acetate, acetic acid and combinations thereof, wherein the lactate is selected from sodium lactate, potassium lactate, calcium lactate, lactic acid and combinations thereof, and wherein the propionate is selected from sodium propionate, potassium propionate, calcium propionate, propionic acid and combinations thereof,
- providing a blood plasma protein product containing on a dry weight basis at least 30% w/w plasma protein
- providing a fruit extract containing on a dry weight basis at least 10% w/w ascorbate;
- mixing the organic acid product, the blood plasma protein product and the fruit extract to prepare a composition with a dry matter content of at least 30% w/w, preferably at least 50% w/w.

The products used in these preparation methods, i.e. the organic acid product, the blood plasma protein product and the fruit extract, have been described in detail herein before.

In a preferred embodiment of the invention, the pH of the composition is adjusted to obtain a value described herein before. If the pH needs to be increased this is preferably done by adding an appropriate amount of an alkali metal hydroxide. If it is desired to lower the pH of the meat treatment composition after combining the various components, this may be suitably done using an appropriate amount of acetic acid and or lactic acid, even though the use of mineral acids for this purpose is not excluded.

Ascorbate may induce unwanted oxygen scavenging in other ingredients of the composition when in powder form. This reaction may be retarded or inhibited by the addition of a filler material to the powder such as silica, maltodextrin, starch. These filler materials are well-known to the person skilled in the art. The amount of filler material preferably is higher than 5% w/w, more preferably higher than 8% w/w, even more preferably higher than 10% w/w, most preferably higher than 12% w/w in the powder.

In a third aspect of the invention, a process for the preparation of processed meat is provided wherein the composition as described herein before is added. The composition may be used in liquid or dry form. If it is used in dry form, it may be reconstituted in a suitable quantity of water, e.g. tap water, before adding it to the meat. To this end, the ingredients are typically agitated for a period of time sufficient to form a homogeneous liquid, which may be a dispersion or solution.

The process for the preparation of processed meat according to the present invention typically comprises the step of adding the composition as described herein before to meat in an amount of between 0.5 and 15% w/w dry matter, preferably between 1.0 and 10% w/w dry matter.

The process according to the present invention is suitable and beneficial for the treatment of most conventional meat products typically offered for human consumption, regardless of the source and/or form in which it is offered.

In a preferred embodiment of the invention, the meat is selected from the group consisting of whole muscle meat, cuts or slices of whole muscle meat, ground or comminuted muscle meat and emulsified meat. In a preferred embodiment of the invention the meat is fresh meat, which may be in the form of whole muscle meat, cuts or slices of whole muscle meat or ground or comminuted muscle meat. In this context the term 'fresh' means that the meat has not been treated by cooking in between removal from the animal carcass and the treatment according to the invention. In a preferred embodiment, the meat is uncooked meat.

Preferably, the meat is obtained from beef cattle, pork, lamb, poultry, and game, most preferably from beef cattle, pork, chicken and turkey. In another embodiment of the invention, the meat is red meat.

The process for the preparation of processed meat may utilize any method that is known and/or conventionally used for combining fresh meat and an additive composition. For example, meat may be treated with the composition of the invention by dispersing it throughout the fresh meat. Suitable methods include injecting, pumping, spraying, soaking, dipping or otherwise dispersing the composition into or onto the meat. In addition, the method may comprise tumbling, kneading, massaging or otherwise manipulate the meat to further disperse the composition throughout the meat. In some embodiments, the composition is injected under pressure into the meat as part of an automated commercial meat production step. Suitable injectors may be set to pump a particular volume of the composition into each piece of the meat.

In a preferred embodiment of the invention, the process for the preparation of processed meat comprises adding an aqueous liquid containing the present preservation composition, and wherein the composition is added by injection tumbling.

Once the aqueous liquid has been dispersed throughout the meat, the meat may subsequently be cooked until the desired internal temperature is reached, packaged and refrigerated or frozen. Alternatively, once the aqueous liquid has been dispersed throughout the meat, the meat may be packaged, cooked and then refrigerated or frozen.

The processed meat obtainable by the process for the preparation of processed meat typically has advantageous characteristics with respect to moisture retention, color, texture, flavor and shelf life.

The invention has been described by reference to certain embodiments discussed above. It will be recognized that these embodiments are susceptible to various modifications and alternative forms well known to those of skill in the art. Many modifications in addition to those described above may be made to the structures and techniques described herein without departing from the spirit and scope of the invention. Accordingly, although specific embodiments have been described, these are examples only and are not limiting upon the scope of the invention.

Furthermore, for a proper understanding of this document and in its claims, it is to be understood that the verb "to comprise" and its conjugations used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

All patent and literature references cited in the present specification are hereby incorporated by reference in their entirety.

The following examples are offered for illustrative purposes only, and are not intended to limit the scope of the present invention in any way.

### EXAMPLES

### Example 1

### Introduction

A meat treatment composition according to the invention was tested in meat against a control meat with no additions and a reference meat to which phosphate had been added. The meat product in the tests was a restructured ham. Tests were performed on the preservative effect of the compositions, and on their contribution to the yield and flavor of the meat.

### Experimental Set-Up

The recipe of the meat treatment composition is presented in Table 1. Dried neutralized vinegar (72 wt.% acetate) was prepared by neutralizing a concentrated vinegar (300 grain, Fleischmann) by adding NaOH until a neutral pH has been reached, and spray drying the concentrated vinegar.

**Table 1**

| | **Composition 1 (wt.%)** |
|---|---|
| Plasma powder 80P ¹ | 43 |
| Dried neutralized vinegar | 53 |
| Sodium ascorbate ² | 4 |

| | |
|---|---|
| ¹ Pore plasma protein plasma powder (80 wt.% protein), ex Sonac ² Sodium ascorbate, ex Epos (Nijkerk, NL) | |

Composition 1 was used in restructured ham products as described in Table 2.

**Table 2**

| **Ingredients** | **Control** | **Refer.** | **Product 1** | **Product 2** | **Product 3** |
|---|---|---|---|---|---|
| Ham chunks | 80 | 80 | 80 | 80 | 80 |
| | | | | | |

| **Brine:** | | | | | |
|---|---|---|---|---|---|
| Colorozo Salt | 1.8 | 1.8 | 1.8 | 1.8 | 1.8 |
| Na-ascorbate | 0.05 | 0.05 | | | |
| Phosphate | | 0.1 | | | |
| Dextrose | 0.8 | 0.8 | 0.8 | 0.8 | 0.8 |
| Composition 1 | | | 1.3 | 1.5 | 1.7 |
| Water | 17.35 | 17.25 | 16.1 | 15.9 | 15.7 |
| | | | | | |
| **Total** | 100 | 100 | 100 | 100 | 100 |

The compositions were applied to the meat by means of vacuum meat tumbling, applying a green weight marination rate of 25% w/w, meaning that 25% w/w brine was added to 100% w/w meat formulation as shown in Table 2. The brines were prepared by suspending the dry ingredients in water, and cooling the suspension to 0°C before applying it to meat. The amount of water in the suspensions was adjusted such that a marination rate of 25% w/w was achieved in the meat.

Materials and equipment that were used to make the meat products were are as follows:
- Tumbler, Type: LU40, LUMAR Ideal Inc., Montreal Canada
- Turbovac, Type: SB-420, HFE Vacuum Systems; program 1 for vacuum, program 6 for sealing.
- Cooking crimp bags 300*400 mm CN301/CT-1
- Cooking: steam cooking cabinet Kerres CS 700
- Novasina LabPartner a_{w}, water activity meter
- Ham cast type ZM201053, EJ Diest

The meat products were prepared according to the following procedure:
1. Room temperature 10°C.
2. Lean pork meat (topside part) was ground with a 13mm plate.
3. The ground meat was divided in portions of 850 gram.
4. Brines were prepared at temperature of 0-4°C . Meat treatment composition 1 was added after salt and dextrose.
5. The ingredients were mixed until fully dispersed.
6. The brine and meat portions were mixed by hand (with gloves) until homogenously dispersed.
7. The meat mixture was packed subsequently in vacuum bags (at 45mbar) and then tumbled at 8 rpm per minute at 4°C for 120 minutes, followed by 30 minutes rest and another 120 minutes of tumbling.
8. The tumbled meat was then stored approximately 18 hours at 0°C (overnight).
9. The next day, 800 gram of tumbled meat were repacked and vacuumed in cook crimp bag.
10. The bag filled with meat was placed in a ham cast type ZM201053.
11. The samples were cooked in the Kerres cabinet until the internal temperature of 72°C was reached according to the cooking program shown in Table 3.
12. After the cooking process had finished, the ham casts (with meat inside) were stored at 0°C/32°F.
13. The samples were taken out and evaluated 36 hours later for yield and 7 days later for sensory testing.

**Table 3**

| **Steps** | **Function Number** | **Time** | **Temperature** |
|---|---|---|---|
| 1 | 5 (cook) | Chamber | 75 °C |
| 2 | 5 (cook) | 120 min. | 75 °C |
| 3 | 8 (shower) | 15 min. | |
| 4 | 1 (dry) | 120 min. | 8 °C |

### Results and discussion

**Table 4**

| | **pH** | | | **Yield** |
|---|---|---|---|---|
| | **brine** | **after tumbling** | **finished ham** | |
| Control | 7.64 | 5.50 | 5.82 | 76.1 |
| Reference | 7.75 | 5.61 | 5.88 | 87.6 |
| Product 1 | 7.36 | 5.64 | 5.87 | 84.7 |
| Product 2 | 7.37 | 5.64 | 5.87 | 88.7 |
| Product 3 | 7.38 | 5.64 | 5.85 | 89.0 |

As shown in Table 4, the cooking yield was significantly higher in the meat products prepared with Composition 1 as compared to the control meat product. The cooking yield increased with increasing dosage of Composition 1 to the extent that the cooking yield was slightly higher than the cooking yield of the reference meat product (with phosphate) at the medium and high dosages of Composition 1.

A color stability test was performed by visual inspection of the meat during storage. The meat was stored in the fridge at 4°C and kept in the dark. It became clear that Composition 1 (in Product 1) and the Control performed equally well with regard to color stability of the meat.

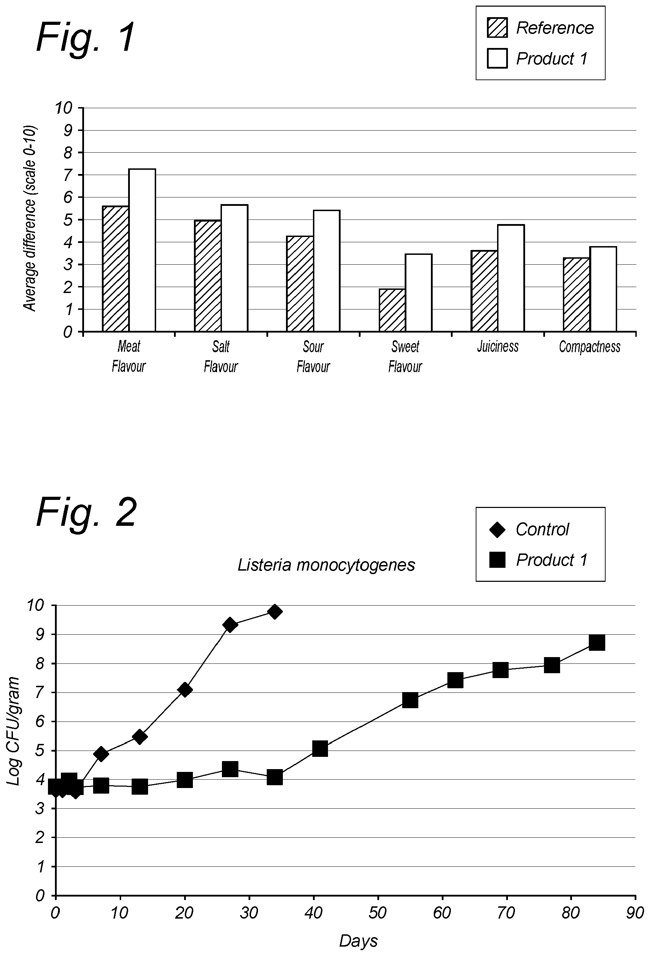

In sensory tests, meat products prepared with Composition 1 (Product 1) were evaluated against the phosphate containing Reference. The flavour and texture were evaluated on the attributes of meatiness, saltiness, sourness, sweetness, juiciness and compactness (Figure 1). Composition 1 exhibited an overall improvement of the flavour and texture as compared to the control.

### Example 2

Restructured hams were prepared in the same way as in Example 1, including a control ham and a ham that was identical to Product 1, except that the dosage of Composition 1 was lowered to 1.05 wt.% (and the water content increased accordingly).

Figure 2 presents the results of a challenge study with *Listeria monocytogenes* at 4 °C. Shelf life is defined as the time at which the microbial counts reach two logs higher than the initial counts. The shelf life for the control meat product was about 20 days. The meat product prepared with Composition 1 had a much longer shelf life of from 50 days to 69 days.

### Example 3

Restructured hams were prepared using two different meat treatment compositions: Composition 1 as described in Example 1 and Composition 2 described in Table 5. Dried neutralized vinegar was prepared as described in Example 1. Na/Ca lactate powder (79 wt.% lactate) was prepared by spraying liquid sodium lactate onto calcium lactate powder in a fluidized bed and drying.

**Table 5**

| | **Composition 2 (wt.%)** |
|---|---|
| Plasma powder 80P ¹ | 24.3 |
| Dried neutralized vinegar | 24.3 |
| Na/Ca lactate powder | 49 |
| Sodium ascorbate ² | 2.4 |

| | |
|---|---|
| ¹ Pore plasma protein plasma powder (80 wt.% protein), ex Sonac ² Sodium ascorbate, ex Epos (Nijkerk, NL) | |

The restricted hams were prepared on the basis of the recipes shown in Table 6.

**Table 6**

| **Ingredients** | **Control** | **Product 1** | **Product 2** |
|---|---|---|---|
| Ham chunks | 80 | 80 | 80 |
| | | | |

| **Brine:** | | | |
|---|---|---|---|
| Colorozo Salt | 1.8 | 1.8 | 1.8 |
| Na-ascorbate | 0.05 | | |
| Phosphate | | | |
| Dextrose | 0.8 | 0.8 | 0.8 |
| Composition 1 | | 1.3 | |
| Composition 2 | | | 2.1 |
| Water | 17.35 | 16.1 | 15.3 |
| | | | |
| **Total** | 100 | 100 | 100 |

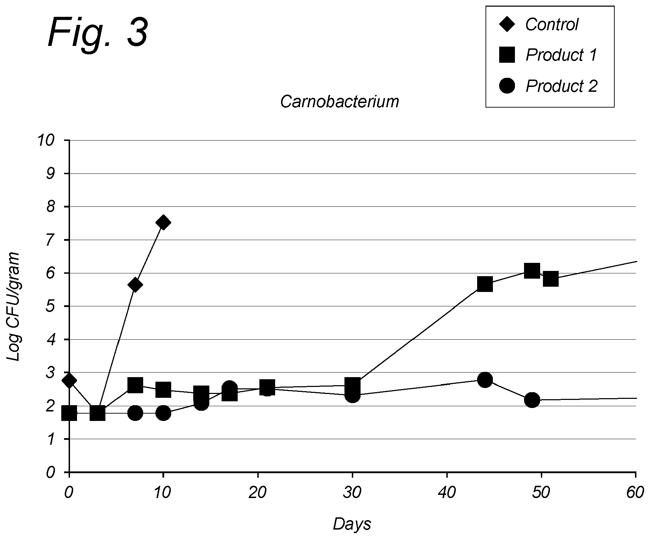

In a challenge study with *Carnobacterium* at 4 °C, the shelf life of the meat product was extended from approximately 9 days for the Control meat product to longer than 60 days for Product 1. Product 2 performed even better, with no significant increase of the number of *Carnobacteria* during 60 days (Figure 3).

### Example 4

Restructured hams were prepared using different meat treatment compositions. The compositions of the meat treatment compositions are shown in Table 7.

**Table 7**

| | **wt.%** | | |
|---|---|---|---|
| | **Compositon A** | **Compositon B** | **Compositon 1** |
| Plasma powder 80P ¹ | | 44.8 | 43.0 |
| Dried neutralized vinegar ² | 93.0 | 55.2 | 53.0 |
| Sodium ascorbate ³ | 7.0 | | 4.0 |

| | | | |
|---|---|---|---|
| ¹ Pore plasma protein plasma powder (80 wt.% protein), ex Sonac ² Same as in Example 1 ³ Sodium ascorbate, ex Epos (Nijkerk, Netherlands) | | | |

The restricted hams were prepared as in Example 1 on the basis of the recipes shown in Table 8.

**Table 8**

| **Ingredients** | **Control** | **Reference** | **Product A** | **Product B** | **Product 1** |
|---|---|---|---|---|---|
| Ham chunks | 80 | 80 | 80 | 80 | 80 |
| | | | | | |

| **Brine:** | | | | | |
|---|---|---|---|---|---|
| Colorozo Salt | 1.8 | 1.8 | 1.8 | 1.8 | 1.8 |
| Na-ascorbate | 0.05 | 0.05 | | | |
| Phosphate | | 0.1 | | | |
| Dextrose | 0.8 | 0.8 | 0.8 | 0.8 | 0.8 |
| Composition A | | | 0.75 | | |
| Composition B | | | | 1.27 | |
| Composition 1 | | | | | 1.32 |
| Water | 17.35 | 17.25 | 16.65 | 16.13 | 16.08 |
| | | | | | |
| **Total** | 100 | 100 | 100 | 100 | 100 |

### Results and discussion

**Table 9**

| | **pH** | | | **Yield** |
|---|---|---|---|---|
| | **brine** | **after tumbling** | **finished ham** | |
| Control | 7.76 | 5.65 | 6.00 | 75.5 |
| Reference | 7.92 | 5.65 | 6.05 | 91.4 |
| Product A | 7.96 | 5.80 | 6.21 | 81.7 |
| Product B | 9.16 | 5.79 | 6.05 | 88.7 |
| Product 1 | 8.92 | 5.81 | 6.16 | 84.8 |

As shown in Table 9, the cooking yield of the product made with the meat treatment composition of the invention (Product 1) was higher than that of the control product and the product that did not contain plasma protein (Product A).

After overnight storage at 0 °C the color of the products was measured by determining the the L-a-b color values. The results are shown in Table 10.

**Table 10**

| | **L*** | **a*** | **B*** | **Δ _{control}** |
|---|---|---|---|---|
| Control | 64.59 | 15.08 | 8.12 | 0 |
| Reference | 64.72 | 15.34 | 7.51 | 0.68 |
| Product A | 65.70 | 15.12 | 8.40 | 1.34 |
| Product B | 66.70 | 14.97 | 8.41 | 2.21 |
| Product 1 | 65.79 | 14.74 | 8.17 | 1.40 |

These results show that the product made with the meat treatment composition of the invention (Product 1) had a color that was closer to the control than the product that did not contain ascorbate (Product B).

## Claims

1. A composition for maintaining or improving the quality of processed meat comprising on a dry matter basis:
- between 20 and 65% w/w acid equivalent of an organic acid component selected from the group of acetate, lactate, propionate and combinations thereof;
- between 10 and 75% w/w of plasma protein; and
- between 0.5 and 5% w/w acid equivalent of ascorbate;
wherein the composition when diluted with distilled water of 20°C to a dry matter content of 10% w/w has a pH in the range of 5.0 to 9.0.

2. Composition according to claim 1, wherein the composition is a powder having a water content of less than 15% w/w; wherein the organic acid component is selected from sodium acetate, sodium lactate, sodium propionate, potassium acetate, potassium lactate, potassium propionate, calcium acetate, calcium lactate, calcium propionate, acetic acid, lactic acid, propionic acid and combinations thereof; and wherein the ascorbate is selected from sodium ascorbate, potassium ascorbate, ascorbic acid and combinations thereof.

3. Composition according to claim 1, wherein the composition is an aqueous liquid having a dry matter content of 10 to 80% w/w.

4. Composition according to any one of the preceding claims, comprising on a dry matter basis at least 25% w/w, preferably between 30 and 60% w/w, acid equivalent of acetate and/or lactate and/or propionate.

5. Composition according to any one of the preceding claims, comprising on a dry matter basis between 12 and 55% w/w, preferably between 15 and 50% w/w, of plasma protein.

6. Composition according to any one of the preceding claims, wherein the aqueous composition obtained by dispersing 10% w/w of the composition into distilled water of 20°C has a pH in the range of 5.5 to 8.5, more preferably in the range of 5.8 to 8.0

7. Composition according to any one of the preceding claims, comprising on a dry matter basis between 1.0 and 4% w/w, preferably between 1.2 and 3.5% w/w, of ascorbate.

8. Method for the preparation of a composition for maintaining or improving the quality of processed meat, comprising
- providing an organic acid product selected from the group of a vinegar product, a lactic acid fermentation product, a propionic acid fermentation product and combinations thereof, containing on a dry weight basis at least 50% w/w acid equivalent of acetate and/or lactate and/or propionate, wherein the acetate is selected from sodium acetate, potassium acetate, calcium acetate, acetic acid and combinations thereof, wherein the lactate is selected from sodium lactate, potassium lactate, calcium lactate, lactic acid and combinations thereof, and wherein the propionate is selected from sodium propionate, potassium propionate, calcium propionate, propionic acid and combinations thereof;
- providing a blood plasma protein product containing on a dry weight basis at least 30% w/w plasma protein;
- providing a fruit extract containing on a dry weight basis at least 10% w/w ascorbate;
- mixing the organic acid product, the blood plasma protein product and the fruit extract to prepare a composition with a dry matter content of at least 30% w/w, preferably at least 50% w/w.

9. Method according to claim 8, wherein the method produces a composition according to any one of claims 1-7.

10. A process of preparing processed meat, said process comprising adding the composition according to any one of claims 1-7 to meat in an amount of between 0.5 and 15% w/w dry matter, preferably between 1.0 and 10%.

11. Process according to claim 10, wherein the meat is red meat.

12. Process according to claim 10 or 11, wherein the composition is an aqueous liquid and wherein the composition is added by injection tumbling.
